(19) Europäisches Patentamt
European Patent Office
Office européen des brevets

(11) **EP 2 770 398 B1**

(12) **EUROPEAN PATENT SPECIFICATION**

(45) Date of publication and mention
of the grant of the patent:
**27.09.2017  Bulletin 2017/39**

(51) Int Cl.:
*G05D 23/19* (2006.01)        *F24D 19/10* (2006.01)
*F24F 11/00* (2006.01)        *F24F 3/06* (2006.01)
*F24F 5/00* (2006.01)        *F24D 3/08* (2006.01)
*F24D 11/02* (2006.01)        *F24D 17/02* (2006.01)

(21) Application number: **14155773.6**

(22) Date of filing: **19.02.2014**

(54) **Fluid circuit system with flow rate control device**

Flüssigkeitskreislaufsystem mit Durchflussregelungsvorrichtung

Système de circuit de fluide avec dispositif de commande de débit

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2013  JP 2013035306**

(43) Date of publication of application:
**27.08.2014  Bulletin 2014/35**

(73) Proprietor: **Mitsubishi Electric Corporation
Chiyoda-ku
Tokyo 100-8310 (JP)**

(72) Inventors:
• **Hata, Masahiro**
**Tokyo, 100-8310 (JP)**
• **Suzuki, Kazutaka**
**Tokyo, 100-8310 (JP)**
• **Hattori, Taro**
**Tokyo, 100-8310 (JP)**

(74) Representative: **Pfenning, Meinig & Partner mbB
Patent- und Rechtsanwälte
Theresienhöhe 11a
80339 München (DE)**

(56) References cited:
**EP-A1- 2 442 203        WO-A1-2007/095685
US-A1- 2009 314 484**

EP 2 770 398 B1

## Description

Technical Field

The present invention relates to a flow rate control technique of a fluid used in a fluid circuit system that performs cooling, heating, and hot water supply using the fluid such as water, as a heat medium.

Background Art

Patent Document 1 describes flow rate control in a fluid circuit system to be performed in accordance with a pressure loss characteristic obtained in a trial operation of the fluid circuit system. Each of Patent Documents 2 and 3 describes flow rate control in a fluid circuit system so that a flow rate becomes a rated flow rate.

Each of Patent Documents 1 to 3 describes flow rate control by detecting a flow rate from a pump feedback signal.

Document D4 refers to a method to regulate and control a thermodynamic device. The thermodynamic device comprises a primary system, a process system and a secondary system. The secondary system may comprise heating devices or components thereof and is a system which receives thermal energy. The primary system is a system which delivers thermal energy and the process system which comprises a compressor and an expansion device is a system transferring the energy from the primary system to the secondary system. The thermodynamic device together with a controller forms a closed control loop and depending on temperature differences between post-temperatures and pre-temperatures of the fluids in the different systems the flowrates of the fluids may be controlled.

Related Art Documents

[Patent Document 1] JP 2001-317748
[Patent Document 2] JP 2001-342989
[Patent Document 3] JP 2001-342966
[Patent Document 4] EP 2 442 205 A1

Summary of Invention

In the flow rate control described in each of Patent Documents 1 to 3, influence of a cooling or heating load during operation is not taken into consideration, so that unnecessary electric energy may be consumed.

The present invention aims at implementing flow rate control that allows energy saving of a fluid circuit system.

A flow rate control device is a flow rate control device that controls a flow rate of a fluid in a fluid circuit system. The fluid circuit system includes a heating/cooling apparatus used for heating or cooling the fluid and a fluid utilization apparatus that utilizes the fluid heated or cooled using the heating/cooling apparatus. The flow rate control device may include:

a load detection unit that detects a load being an amount of heat needed by the fluid utilization apparatus; and
a flow rate control unit that controls the flow rate according to the load detected by the load detection unit.

Advantageous Effects of the Invention

The flow rate control device of the present invention performs flow rate control according to the load on the fluid utilization apparatus. With this arrangement, energy saving of the fluid circuit system may be achieved.

Brief Description of Drawings

The present invention will become fully understood from the detailed description given hereinafter in conjunction with the accompanying drawings, in which:

Fig. 1 is a diagram showing a configuration of a fluid circuit system 100 according to a first embodiment;
Fig. 2 is a diagram showing flows of a refrigerant and water during a hot water supply and heating operation in the fluid circuit system 100 in the first embodiment;
Fig. 3 is a diagram showing flows of the refrigerant and the water during a cooling operation in the fluid circuit system 100 in the first embodiment;
Fig. 4 is a diagram showing a configuration of a control device 35 in the first embodiment;
Fig. 5 is a flowchart showing operations of the control device 35 in the first embodiment; and
Fig. 6 is a diagram showing a configuration of a control device 35 in a second embodiment.

Description of Embodiments

In describing preferred embodiments illustrated in the drawings, specific terminology is employed for the sake of clarity. However, the disclosure of the present invention is not intended to be limited to the specific terminology so selected, and it is to be understood that each specific element includes all technical equivalents that operate in a similar manner and achieve a similar result.

First Embodiment.

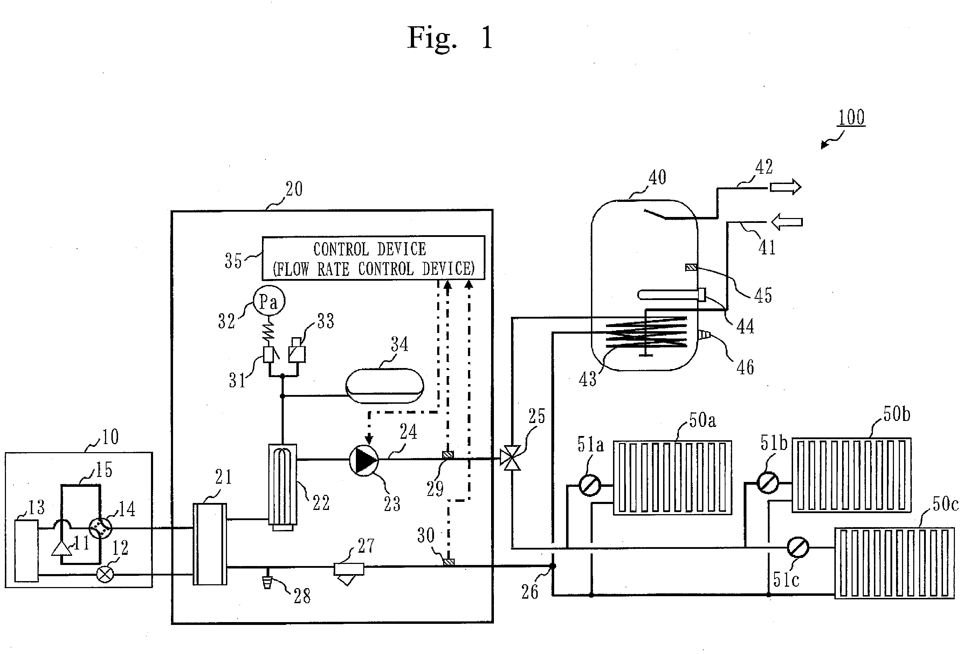

Fig. 1 is a diagram showing a configuration of a fluid circuit system 100 according to a first embodiment.
The fluid circuit system 100 includes an outdoor unit 10 (an example of a heating/cooling apparatus), an indoor unit 20, a hot water storage tank 40 (an example of a fluid utilization apparatus), and air conditioners 50a to 50c (examples of fluid utilization apparatuses).

The outdoor unit 10 includes a compressor 11, an expansion valve 12, a heat exchanger 13, and a four-way valve 14.

The indoor unit 20 includes a heat exchanger 21, an auxiliary heater 22, a pump 23, and so on.

The compressor 11, the heat exchanger 21, the expansion valve 12, and the heat exchanger 13 are sequentially connected by pipes, thereby forming a refrigerant circuit 15 in which a refrigerant circulates. The four-way valve 14 is provided for the refrigerant circuit 15, thereby allowing switching of a circulation direction of the refrigerant.

The heat exchanger 21, the auxiliary heater 22, the pump 23, the hot water storage tank 40, and so on are sequentially connected by pipes, thereby forming a water circuit 24 in which water (an example of a fluid) circulates. In the water circuit 24, a three-way valve 25 and a merging point 26 between the storage tank 40 and the heat exchanger 21 via each of the air conditioners 50a to 50c are connected by some of the pipes. The three-way valve 25 is provided between the pump 23 and the storage tank 40. Valves 51a to 51c are respectively provided for the air conditioners 50a to 50c. Each of the valves 51a to 51c is provided for adjusting a flow rate of the water that flows into a corresponding one of the air conditioners 50a to 50c. In the water circuit 24, a strainer 27 and a drain plug 28 are connected between the merging point 26 and the heat exchanger 21.

Temperature sensors 29 and 30 are provided for the water circuit 24. The temperature sensor 29 detects a temperature (post-temperature) of the water that has flown out from the heat exchanger 21 and is to be supplied to each of the storage tank 40 and the air conditioners 50a to 50c. The temperature sensor 30 detects a temperature (pre-temperature) of the water that has returned from each of the storage tank 40 and the air conditioners 50a to 50c and is to be flown into the heat exchanger 21.

The indoor unit 20 also includes a pressure relief valve 31 that relieves pressure in the water circuit 24, a pressure gauge 32 that detects the pressure in the water circuit 24, an air escape valve 33 that releases air in the water circuit 24, and an expansion tank 34 that stores the water that has expanded.

The indoor unit 20 also includes a control device 35 (flow rate control device) that controls the pump 23 based on the post-temperature detected by the temperature sensor 29 and the pre-temperature detected by the temperature sensor 30.

A supply pipe 41 that supplies water to the hot water storage tank 40 is connected to a lower portion of the storage tank 40. A hot water discharge pipe 42 that supplies hot water to an external sanitary facility is connected to an upper portion of the storage tank 40.

The hot water storage tank 40 includes a coil 43 that heat-exchanges the water stored in the storage tank 40 and the water circulating in the water circuit 24, an electric heater 44 that heats the water stored in the hot water storage tank 40, and a temperature sensor 45 that detects a temperature of the water stored in the hot water storage tank 40.

The storage tank 40 also includes a drainage plug 46 for draining the water stored in the storage tank 40.

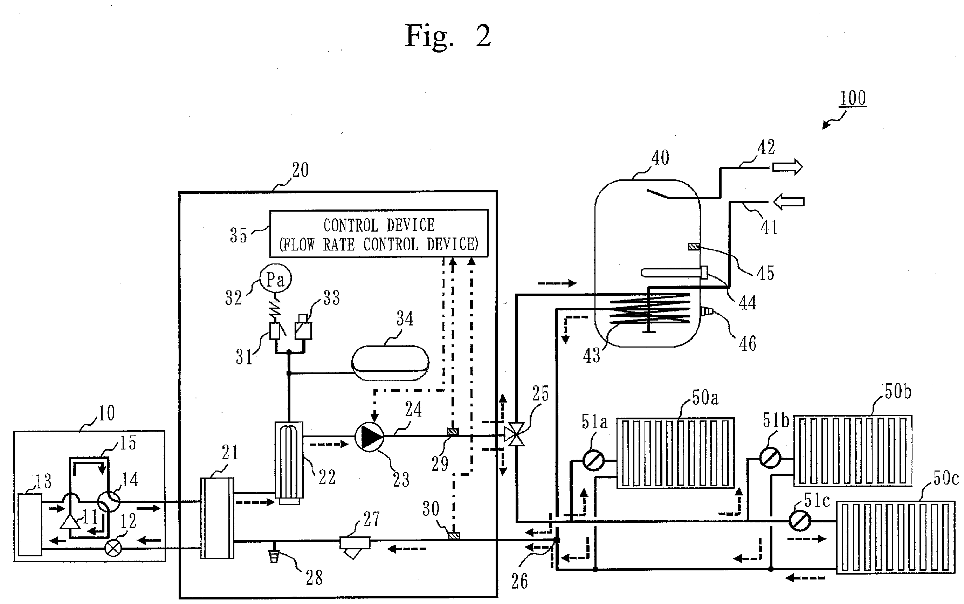

Fig. 2 is a diagram showing flows of the refrigerant and water during a hot water supply and heating operation of the fluid circuit system 100 in the first embodiment. Referring to Fig. 2, a solid line arrow indicates a flow of the refrigerant, while a broken line arrow indicates a flow of the water.

During the hot water supply and heating operation, the four-way valve 14 is set in a flow path indicated by a solid line in Fig. 1. Openings of the three-way valve 25 are all open.

A gas refrigerant that has been brought to a high temperature and a high pressure by the compressor 11 flows into the heat exchanger 21, in the refrigerant circuit 15. The gas refrigerant that has flown into the heat exchanger 21 is heat-exchanged with the water circulating in the water circuit 24, and condenses and turns into a liquid refrigerant. On this occasion, the water circulating in the water circuit 24 is heated. The liquid refrigerant passes through the expansion valve 12 where the liquid refrigerant expands and turns into a gas-liquid two-phase refrigerant with a low temperature and a low pressure. The gas-liquid two-phase refrigerant flows into the heat exchanger 13 to be heat-exchanged with external air, and evaporates and turns into a gas refrigerant. The gas refrigerant flows into the compressor 11 to be compressed to a high temperature and a high pressure again.

On the other hand, the water heated at the heat exchanger 21 flows into the three-way valve 25 through the auxiliary heater 22 and the pump 23, in the water circuit 24. The auxiliary heater 22 further heats the water heated by the heat exchanger 21, if needed. A portion of the water that has flown into the three-way valve 25 flows into the hot water storage tank 40, and the remaining portion of the water flows into each of the air conditioners 50a to 50c.

The water that has flown into the hot water storage tank 40 is heat-exchanged with the water stored in the hot water storage tank 40 at the coil 43, thereby being cooled. On this occasion, the water stored in the hot water storage tank 40 is heated.

The water that has flown into each of the air conditioners 50a to 50c is heat-exchanged with air of a room where a corresponding one of the air conditioners 50a to 50c is installed, thereby being cooled. On this occasion, the air of the room is heated. The flow rate of the water that flows into each of the air conditioners 50a to 50c is adjusted by a corresponding one of the valves 51a to 51c.

The water cooled at the hot water storage tank 40 and the water cooled at each of the air conditioners 50a to 50c merge at the merging point 26 and flow into the heat exchanger 21. The resulting water is then heated again.

The description about Fig. 2 was directed to the case of the hot water supply and heating operation where a hot water supply operation and a heating operation are both performed. The hot water supply operation alone or the heating operation alone, however, can also be performed by controlling the three-way valve 25.

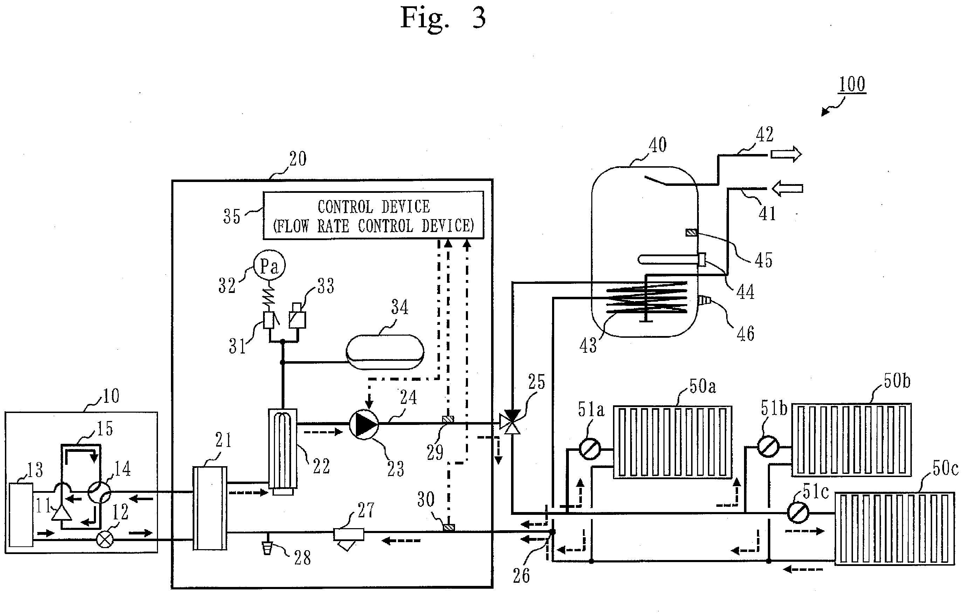

Fig. 3 is a diagram showing flows of the refrigerant and water during a cooling operation in the fluid circuit system 100 in the first embodiment. Referring to Fig. 3, a solid line arrow shows a flow of the refrigerant, while a broken line arrow shows a flow of the water.

In the case of the cooling operation, the four-way valve 14 is set in a flow path indicated by a broken line in Fig. 1. The opening of the three-way valve 25 on the side of the hot water supply tank 40 is closed, and the remaining openings of the three-way valve 25 are opened.

A gas refrigerant that has been brought to a high temperature and a high pressure by the compressor 11 flows into the heat exchanger 13, in the refrigerant circuit 15. The gas refrigerant that has flown into the heat exchanger 13 is heat-exchanged with external air, and condenses and turns into a liquid refrigerant. The liquid refrigerant passes through the expansion valve 12 where the liquid refrigerant expands and turns into a gas-liquid two-phase refrigerant with a low temperature and a low pressure. The gas-liquid two-phase refrigerant flows into the heat exchanger 21 to be heat-exchanged with the water circulating in the water circuit 24, and evaporates and turns into a gas refrigerant. On this occasion, the water circulating in the water circuit 24 is cooled. The gas refrigerant flows into the compressor 11 to be compressed to a high temperature and a high pressure again.

On the other hand, the water cooled at the heat exchanger 21 flows into the three-way valve 25 through the auxiliary heater 22 and the pump 23 in the water circuit 24. The water that has flown into the three-way valve 25 flows into each of the air conditioners 50a to 50c.

The water that has flown into each of the air conditioners 50a to 50c is heat-exchanged with air of the room where a corresponding one of the air conditioners 50a to 50c is installed, thereby being heated. On this occasion, the air of the room is cooled. The flow rate of the water that flows into each of the air conditioners 50a to 50c is adjusted by a corresponding one of the valves 51a to 51c.

The water cooled at each of the air conditioners 50a to 50c flows into the heat exchanger 21 to be heated again.

In the case of the hot water supply operation, when the water stored in the hot water storage tank 40 is used and cold water is supplied to the hot water storage tank 40, a load on the hot water storage tank 40 (amount of heat necessary for heating the water stored in the hot water storage tank 40 to a set temperature) increases. On the other hand, when the water stored in the hot water supply tank 40 has been heated to the set temperature, it is just enough to arrange such that the water stored in the hot water supply tank 40 does not get cold. Thus, the load on the hot water storage tank 40 is reduced. That is, the load on the hot water storage tank 40 changes according to the temperature of the water stored in the hot water storage tank 40.

In each of the cases of the heating operation and the cooling operation, when each of the valves 51a to 51c is operated by a user a load on each of the air conditioners 50a to 50c (amount of heat needed by each of the air conditioners 50a to 50c) changes.

A load on the fluid circuit system 100 (sum of a load on the hot water storage tank 40 and a load on each of the air conditioners 50a to 50c) changes according to whether the hot water supply operation alone is to be performed, the heating operation alone is to be performed, or both of the hot water supply operation and the heating operation are to be performed.

The load on the fluid circuit system 100 changes according to the influence such as an external air temperature, as well.

When the load on the fluid circuit system 100 changes, a change occurs in a temperature difference between a post-temperature detected by the temperature sensor 29 and a pre-temperature detected by the temperature sensor 30. Specifically, when the load on the fluid circuit system 100 increases, the temperature difference increases. When the load on the fluid circuit system 100 decreases, the temperature difference decreases.

Assume that the flow rate of the water that circulates in the water circuit 24 is set to be constant independently of a change in the load on the fluid circuit system 100. Then, when the load is large, the absolute value of the amount of heat to be supplied to each of the hot water storage tank 40 and the air conditioners 50a to 50c will become insufficient for a desired operation. On the other hand, when the load is small, the absolute value of the amount of heat to be supplied to each of the hot water storage tank 40 and the air conditioners 50a to 50c will exceed the desired operation. As a result, unnecessary power will be consumed.

Then, the control device 35 controls the number of rotations of the pump 23 according to the load on the fluid circuit system 100, thereby controlling the flow rate of the water that circulates in the water circuit 24.

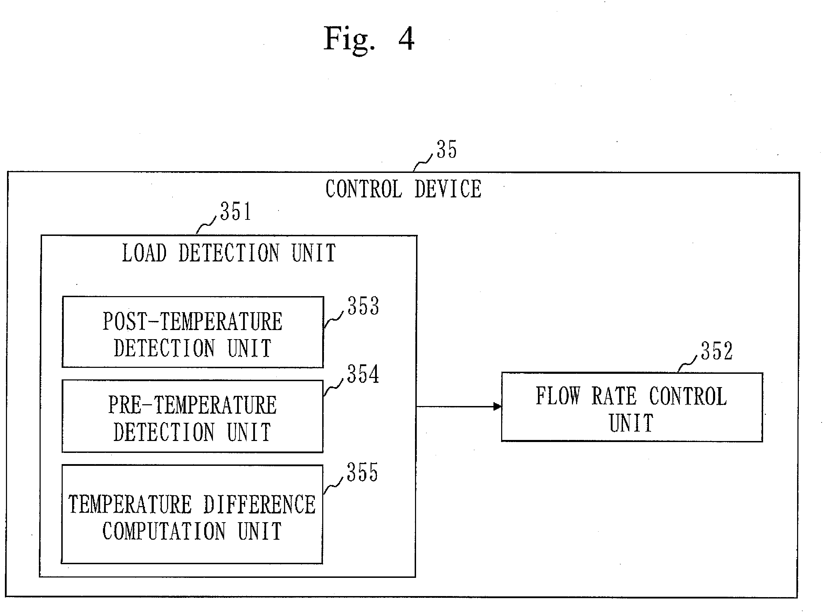

Fig. 4 is a diagram showing a configuration of the control device 35 in the first embodiment.

The control device 35 includes a load detection unit 351 and a flow rate control unit 352.

The load detection unit 351 detects a load on the fluid circuit system 100. The load detection unit 351 includes a post-temperature detection unit 353, a pre-temperature detection unit 354, and a temperature difference computation unit 355.

Using the temperature sensor 29, the post-temperature detection unit 353 detects a post-temperature.

Using the temperature sensor 30, the pre-temperature detection unit 354 detects a pre-temperature.

The temperature difference computation unit 355 detects a temperature difference between the post-temperature and the pre-temperature as a load on the fluid circuit system 100.

The flow rate control unit 352 controls the number of rotations of the pump 23 according to the load detected by the load detection unit 351, thereby controlling the flow rate of the water that circulates in the water circuit 24.

Specifically, the larger the load, the more the flow rate control unit 352 increases the flow rate of the water that circulates in the water circuit 24. Then, the smaller the load, the more the flow rate control unit 352 reduces the flow rate of the water that circulates in the water circuit 24.

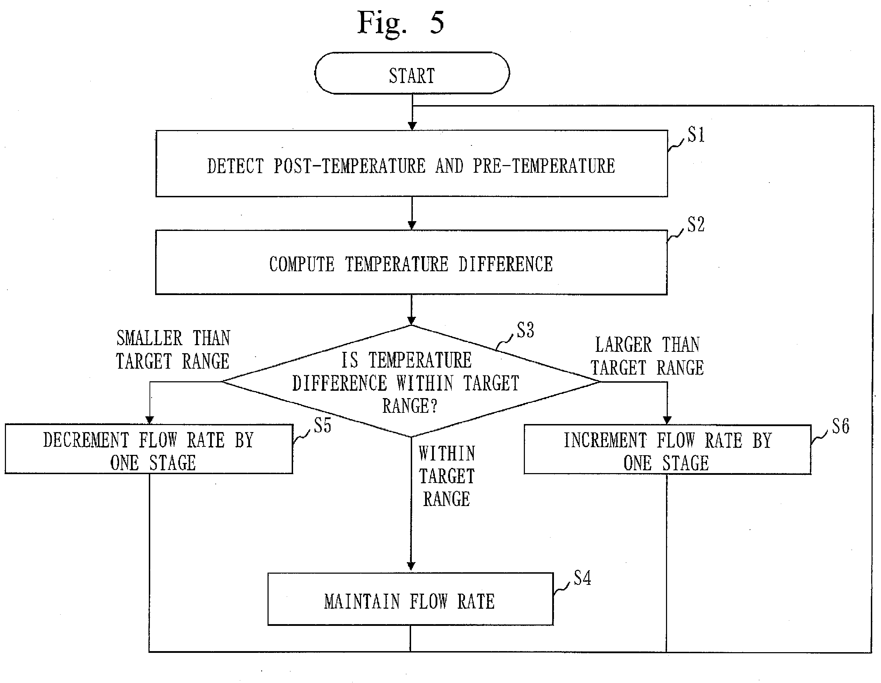

Fig. 5 is a flowchart showing operations of the control device 35 in the first embodiment.

First, the post-temperature detection unit 353 detects a post-temperature, and the pre-temperature detection unit 354 detects a pre-temperature (in step S1). Then, the temperature difference computation unit 355 computes a difference between the post-temperature and the pre-temperature that have been detected in step S1 (in step S2).

The flow rate control unit 352 determines whether or not the temperature difference computed in step S2 is within a target range, smaller than the target range, or larger than the target range (in step S3).

When the temperature difference is determined to be within the target range, the flow rate control unit 352 maintains the number of rotations of the pump 23, thereby maintaining the flow rate of the water (in step S4). When the temperature difference is determined to be smaller than the target range, the flow rate control unit 352 decrements the number of rotations of the pump 23 by one stage, thereby reducing the flow rate of the water (in step S5). When the temperature difference is determined to be larger than the target range, the flow rate control unit 352 increments the number of rotations of the pump 23 by one stage, thereby increasing the flow rate of the water (in step S6).

Then, after a predetermined period of time has elapsed, the control device 35 executes processes starting from step S1 again.

In the fluid circuit system 100 in the first embodiment, when a load on the fluid circuit system 100 is large, the absolute value of the amount of heat to be supplied to each of the hot water storage tank 40 and the air conditioners 50a to 50c may be increased by increasing the flow rate of the fluid. As a result, the water stored in the hot water storage tank 40 may be heated in a short period of time, and the room where each of the air conditioners 50a to 50c is installed may be heated up or cooled in a short period of time. Further, since the water may be heated in the short period of time and the room may be heated up or cooled in the short period of time, power consumption may be reduced.

When a load on the fluid circuit system 100 is small in the fluid circuit system 100 in the first embodiment, the absolute value of the amount of the heat to be supplied to each of the hot water storage tank 40 and the air conditioners 50a to 50c may be reduced by reducing the flow rate of the fluid. As a result, consumption of unnecessary power may be prevented, so that power consumption of the fluid circuit system may be reduced.

The flow rate control unit 352 controls the flow rate of the fluid within flow rate limitations (upper and lower limit values) according to the performances of the outdoor unit 10 and the like and within a flow rate limitation (upper limit value) according to the pipes to be used in the fluid circuit system 100.

The flow rate limitations according to the performances define a flow rate range that allows certain performances to be exhibited. The flow rate limitation according to the pipes defines a flow rate range that will not adversely affect the pipes.

In particular, when the pipe is clogged with dust or the like, the flow rate control unit 352 controls the flow rate of the fluid within the flow rate limitations.

It may also be so arranged that the fluid circuit system 100 includes a flow rate sensor that detects the flow rate of the water, and that, according to the flow rate detected by the flow rate sensor, the flow rate control unit 352 grasps the flow rate of the fluid at a time of detection.

Alternatively, it may also be so arranged that the fluid circuit system 100 does not include the flow rate sensor that detects the flow rate of the water, and that, based on information on a PWM feedback signal or the like obtained from the pump 23, the flow rate control unit 352 grasps the flow rate of the fluid when the PWM feedback signal or the like has been obtained. In this case, the cost for the fluid circuit system 100 corresponding to the flow rate sensor may be reduced.

Second Embodiment.

Notification of a flow rate and a COP (Coefficient Of Performance) to a user, a construction contractor, and the like will be described in a second embodiment.

A difference from the first embodiment will be described, in the second embodiment.

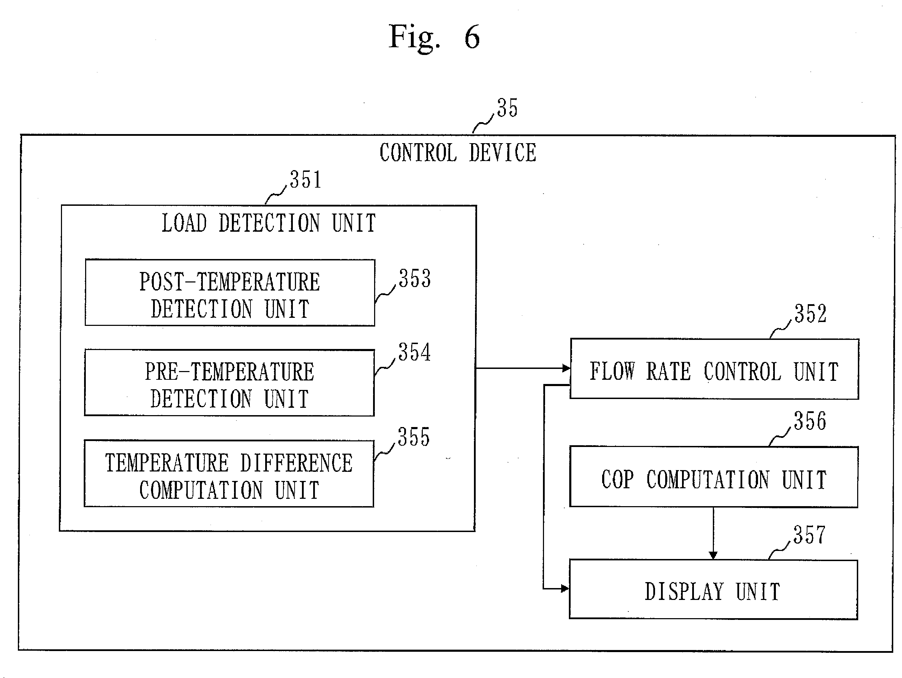

Fig. 6 is a diagram showing a configuration of a control device 35 according to the second embodiment.

The control device 35 shown in Fig. 6 includes a COP computation unit 356 and a display unit 357, in addition to the functions included by the control device 35 shown in Fig. 4.

The COP computation unit 356 computes a COP at a predetermined timing.

The predetermined timing is a timing instructed by the user or the construction contractor, a timing of changing the flow rate of water, a regular timing, or the like.

The COP can be herein computed by "COP = Q Δ T/W", based on a water flow rate Q, a temperature difference ΔT between a post-temperature and a pre-temperature and power consumption W of the fluid circuit system 100.

The display unit 357 outputs the water flow rate, the COP computed by the COP computation unit 356, and the power consumption to a remote controller for controlling the fluid circuit system 100 or a different display apparatus to display the water flow rate, the COP, and the power consumption.

The different display apparatus is, for example, a PC or a portable terminal of the user or the construction contractor. The display unit 357 outputs the water flow rate and the COP to the different display apparatus through a wireless network formed by Wi-Fi (Wireless Fidelity) or the like, for example.

In the fluid circuit system 100 in the second embodiment, the user or the construction contractor may know the water flow rate, the COP and the power consumption. Consequently, the user or the construction contractor may become aware of an abnormal state of the fluid circuit system 100. Further, energy saving may be promoted by changing setting by the user in consideration of the energy saving.

[Description of Reference Symbols]

10: outdoor unit, 11: compressor, 12: expansion valve, 13: heat exchanger; 20: indoor unit, 21: heat exchanger, 22: auxiliary heater, 23: pump, 24: water circuit, 25: three-way valve, 26: merging point, 27: strainer, 28: drain plug, 29: temperature sensor, 30: temperature sensor, 31: pressure relief valve, 32: pressure gauge, 33: air escape valve, 34: expansion tank, 35: control device, 351: load detection unit, 352: flow rate control unit, 353: post-temperature detection unit, 354: pre-temperature detection unit, 355: temperature difference computation unit, 356: COP computation unit, 357: display unit, 40: hot water storage tank, 41: supply pipe, 42: hot water discharge pipe, 43: coil, 44: electric heater, 45: temperature sensor, 46: drain plug, 50: air conditioner, 51: valve, 100: fluid circuit system

**Claims**

1. A fluid circuit system (100) comprising:

   a heating/cooling apparatus (10) for heating or cooling a fluid;
   a fluid utilization apparatus (40, 50a-50c) that is connected to the
   heating/cooling apparatus by a pipe and adapted to utilize the heated or cooled
   fluid and

   a flow rate control device (35) adapted to control a flow rate of the fluid according to a load being an amount of heat required by the fluid utilization apparatus,
   the flow rate control device comprising:

      a load detection unit (351) adapted to detect the load; and
      a flow rate control unit (352) adapted to control the flow rate according to the load detected by the load detection unit,

   wherein the load detection unit includes:

      a post-temperature detection unit (353) adapted to detect a post-temperature being a temperature of the fluid supplied to the fluid utilization apparatus (40, 50a-50c);
      a pre-temperature detection unit (354) adapted to detect a pre-temperature being a temperature of the fluid returning from the fluid utilization apparatus (40, 50a-50c); and
      a temperature difference computation unit (355) adapted to compute a difference between the post-temperature detected by the post-temperature detection unit and the pre-temperature detected by the temperature detection unit,

   **characterized in that** the flow rate control device further includes:

      a COP computation unit (356) adapted to compute a COP (Coefficient Of Performance) based on the flow rate, the temperature difference, and power consumption of the heating/cooling apparatus, by

$$COP = Q\Delta T/W$$

      Q being the flow rate, W the power consumption of the fluid circuit system and ΔT the difference between the post-temperature and the pre-temperature.

2. The fluid circuit system (100) according to claim 1, wherein the flow rate control unit is adapted to increase the flow rate the more, the larger the temperature difference is, and is further adapted to reduce the flow rate the more, the smaller the temperature difference is.

3. The fluid circuit system (100) according to claim 1 or 2,
   wherein the flow rate control device further includes:

a display unit (357) adapted to display the flow rate and the COP computed by the COP computation unit on a remote controller or a different display apparatus.

4. The fluid circuit system (100) according to one of claims 1 to 3, wherein the flow rate control unit is adapted to control a number of rotations of a pump, thereby controlling the flow rate; and wherein the COP computation unit is adapted to compute the flow rate based on information obtained from the pump.

5. The fluid circuit system (100) according to any one of claims 1 to 4, wherein the flow rate control unit is adapted to control the flow rate within a predetermined upper and lower limit range of the flow rate.

**Patentansprüche**

1. Fluidkreislaufsystem (100) aufweisend:

ein Heiz-/Kühlgerät (10) zum Heizen oder Kühlen eines Fluids;
ein Fluidverwendungsgerät (40, 50a-50c), das mit dem Heiz-/Kühlgerät durch ein Rohr verbunden ist und angepasst ist, das geheizte oder gekühlte Fluid zu verwenden, und
ein Flussratenkontrollgerät (35), angepasst zum Kontrollieren einer Flussrate des Fluids entsprechend einer Last, die ein Betrag an Wärme ist, der durch das Fluidverwendungsgerät erfordert wird,
wobei das Flussratenkontrollgerät aufweist:

eine Lastdetektionseinheit (351), angepasst zum Detektieren der Last; und
eine Flussratenkontrolleinheit (352), angepasst zum Kontrollieren der Flussrate entsprechend der durch die Lastdetektionseinheit detektierten Last,

wobei die Lastdetektionseinheit enthält:

eine Nach-Temperaturdetektionseinheit (353), angepasst zum Detektieren einer Nach-Temperatur, welches eine Temperatur des Fluids ist, das dem Fluidverwendungsgerät (40, 50a-50c) zugeführt wird;
eine Vor-Temperaturdetektionseinheit (354), angepasst zum Detektieren einer Vor-Temperatur, welche eine Temperatur des Fluids ist, das von dem Fluidverwendungsgerät (40, 50a-50c) zurückkommt; und
eine Temperaturdifferenzberechnungseinheit (355), angepasst zum Berechnen einer Differenz zwischen der Nach-Temperatur, die durch die Nach-Temperaturdetektionseinheit detektiert wurde und der Vor-Temperatur, die durch die Vor-Temperaturdetektionseinheit detektiert wurde,

**dadurch gekennzeichnet, dass**
das Flussratenkontrollgerät außerdem enthält:

eine COP Berechnungseinheit (356), angepasst zum Berechnen eines COP (Coefficient of Performance, Performance-Koeffizient) basierend auf der Flussrate, der Temperaturdifferenz und Leistungsverbrauch des Heiz-/Kühlgerätes als

$$COP = Q\Delta T/W,$$

wobei Q die Flussrate ist, W der Leistungsverbrauch des Fluidkreislaufsystems und $\Delta T$ die Differenz zwischen der Nach-Temperatur und der Vor-Temperatur.

2. Fluidkreislaufsystem (100) nach Anspruch 1, wobei die Flussratenkontrolleinheit angepasst ist zum Erhöhen der Flussrate umso mehr, je größer die Temperaturdifferenz ist, und weiter angepasst ist, die Flussrate umso mehr zu reduzieren, je kleiner die Temperaturdifferenz ist.

3. Fluidkreislaufsystem (100) nach Anspruch 1 oder 2, wobei das Flussratenkontrollgerät weiter enthält:

eine Anzeigeeinheit (357), angepasst zum Anzeigen der Flussrate und des COP, der durch die COP-Berechnungseinheit berechnet wurde, auf einer Fernsteuerung oder einem anderen Anzeigegerät.

4. Fluidkreislaufsystem (100) nach einem der Ansprüche 1 bis 3, wobei die Flussratenkontrolleinheit angepasst ist zum Kontrollieren einer Anzahl von Rotationen einer Pumpe, um dadurch die Flussrate zu kontrollieren; und wobei die COP-Berechnungseinheit angepasst ist, die Flussrate basierend auf von der Pumpe erhaltenen Informationen zu berechnen.

5. Fluidkreislaufsystem (100) nach einem der Ansprüche 1 bis 4, wobei die Flussratenkontrolleinheit angepasst ist zum Kontrollieren der Flussrate innerhalb eines vorbestimmten oberen und unteren Grenzbereichs der Flussrate.

**Revendications**

1.  Système de circuit de fluide (100) comprenant :

    un appareil de chauffage / de refroidissement (10) destiné à chauffer ou à refroidir un fluide ;
    un appareil d'utilisation du fluide (40, 50a - 50c) qui est connecté à l'appareil de chauffage / de refroidissement par une canalisation, et qui est adapté de façon à utiliser le fluide chauffé ou refroidi ; et
    un dispositif de commande du débit (35) qui est adapté de façon à commander le débit du fluide selon une charge qui est une quantité de chaleur requise par l'appareil d'utilisation du fluide ;
    le dispositif de commande du débit comprenant :

    une unité de détection de charge (351) qui est adaptée de façon à détecter la charge ; et
    une unité de commande du débit (352) qui est adaptée de façon à commander le débit selon la charge détectée par l'unité de détection de la charge ;

    dans lequel l'unité de détection de la charge comprend :

    une unité de détection de post-température (353) qui est adaptée de façon à détecter une post-température, à savoir la température du fluide fourni à l'appareillage d'utilisation du fluide (40, 50a- 50c) ;
    une unité de détection de pré-température (354) qui est adaptée de façon à détecter une pré-température, à savoir la température du fluide qui est renvoyé par l'appareillage d'utilisation du fluide (40, 50a - 50c) ; et
    une unité de calcul d'une différence de température (355) qui est adaptée de façon à calculer la différence entre la post-température détectée par l'unité de détection de post-température, et la pré-température détectée par l'unité de détection de pré-température ;

    **caractérisé en ce que** le dispositif de commande du débit comprend en outre :

    une unité de calcul de COP (356) qui est adaptée de façon à calculer un COP (coefficient de performance) sur la base du débit, de la différence de température, et de la puissance consommée par l'appareil de chauffage / de refroidissement, selon la formule :

$$COP = Q\Delta T / W$$

dans laquelle Q représente le débit, W représente la puissance consommée du système de circuit de fluide, et $\Delta T$ représente la différence entre la post-température et la pré-température.

2.  Système de circuit de fluide (100) selon la revendication 1,
    dans lequel l'unité de commande du débit est adaptée de façon à augmenter davantage le débit, plus la différence de température est élevée, et est adaptée en outre de façon à réduire davantage le débit, plus la différence de température est faible.

3.  Système de circuit de fluide (100) selon la revendication 1 ou la revendication 2,
    dans lequel le dispositif de commande du débit comprend en outre :

    une unité d'affichage (357) qui est adaptée de façon à afficher le débit et le COP calculé par l'unité de calcul du COP, sur un contrôleur distant ou sur un appareil d'affichage différent.

4.  Système de circuit de fluide (100) selon l'une quelconque des revendications 1 à 3,
    dans lequel l'unité de commande du débit est adaptée de façon à commander la vitesse d'une pompe, en commandant de ce fait le débit ; et
    dans lequel l'unité de calcul du COP est adaptée de façon à calculer le débit sur la base des informations obtenues en provenance de la pompe.

5.  Système de circuit de fluide (100) selon l'une quelconque des revendications 1 à 4,
    dans lequel l'unité de commande du débit est adaptée de façon à commander le débit à l'intérieur d'une plage comprise entre une limite supérieure et une limite inférieure du débit.

# Fig. 1

Fig. 2

Fig. 3

# Fig. 4

EP 2 770 398 B1

```
                                    35
                        CONTROL DEVICE
            351
        LOAD DETECTION UNIT
    ┌─────────────────────────┐  353
    │   POST-TEMPERATURE      │
    │   DETECTION UNIT        │
    └─────────────────────────┘  354
    ┌─────────────────────────┐
    │   PRE-TEMPERATURE       │  ──→   FLOW RATE CONTROL
    │   DETECTION UNIT        │              UNIT        352
    └─────────────────────────┘
    ┌─────────────────────────┐  355
    │ TEMPERATURE DIFFERENCE  │
    │   COMPUTATION UNIT      │
    └─────────────────────────┘
```

# Fig. 5

START

↓

DETECT POST-TEMPERATURE AND PRE-TEMPERATURE ⟋S1

↓

COMPUTE TEMPERATURE DIFFERENCE ⟋S2

↓

IS TEMPERATURE DIFFERENCE WITHIN TARGET RANGE? ⟋S3

SMALLER THAN TARGET RANGE

LARGER THAN TARGET RANGE

WITHIN TARGET RANGE

DECREMENT FLOW RATE BY ONE STAGE ⟋S5

INCREMENT FLOW RATE BY ONE STAGE ⟋S6

MAINTAIN FLOW RATE ⟋S4

EP 2 770 398 B1

## Fig. 6

EP 2 770 398 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001317748 A
- JP 2001342989 A
- JP 2001342966 A
- EP 2442205 A1